# EUROPEAN PATENT APPLICATION

(11) **EP 2 662 950 A1**
(43) Date of publication of application: **13.11.2013**
(21) Application number: 12167012.9
(22) Date of filing: 07.05.2012
(51) Int. Cl.: H02K 1/16, H02K 3/493

(54) **Stator for an electrical machine**

(71) Applicant: Siemens Aktiengesellschaft, 80333 München (DE)
(72) Inventor: Semmer, Silvio, 7330 Brande (DK)

(57) **Abstract**

Stator (14) for an electrical machine, in particular for a generator of a wind turbine, comprising a plurality of interconnected stator segments (2) forming a generally annular structure, each stator segment (2) including
- a yoke (3) extending over a section of the annular structure;
- a plurality of teeth (4) projecting radial outwards from the yoke (3) so as to define a plurality of gaps (5) intermediately arranged between the teeth (4), each gap (5) containing conductive windings (6) that are retained therein by a means of fixture;
- at least one connecting portion (9) adapted to be connected to the connecting portion (9) of an adjacent stator segment (2), the at least one connecting portion (9) comprising a half tooth (10) having a width (W2) corresponding to half of the width (W1) of each tooth (4), wherein at least two adjacent half teeth (10) form at least one tooth (4) located at the joint of interconnected stator segments (2), characterized in that at least the means of fixture retaining the windings (6) in the gap (5) adjacent to the tooth (4) formed by the two adjacent half teeth (10) is a resin sealing a radial outer section of the gap (5) adjacent to the at least one connecting portion (9).

## Description

The invention relates to a stator for an electrical machine, in particular for a generator of a wind turbine, comprising a plurality of interconnected stator segments forming a generally annular structure, each stator segment including
- a yoke extending over a section of the annular structure;
- a plurality of teeth projecting radial outwards from the yoke so as to define a plurality of gaps intermediately arranged between the teeth, each gap containing conductive windings that are retained therein by a means of fixture;
- at least one connecting portion adapted to be connected to the connecting portion of an adjacent stator segment, the at least one connecting portion comprising a half tooth having a width corresponding to half of the width of each tooth, wherein two adjacent half teeth form a tooth located at the joint of interconnected stator segments.

Nowadays electrical machines, in particular generators of direct drive wind turbines, may have significant sizes with diameters of several meters. As it is difficult and expensive to manufacture large components as one piece, it is common to assemble structural members like rotors from smaller components. The smaller components are easy to manufacture and to assemble.

The annular structure of a conventional stator, in particular a stator for a generator of a direct drive wind turbine, is usually built from a plurality of stator segments connected by bolts. Each stator segment includes a yoke that extends over a section of the annular structure of the stator. A plurality of radial teeth project radial outwards from the yoke. The radial teeth are adapted to support conductive windings that are arranged in slots or gaps defined by consecutive teeth.

The stator segments are connected to each other via connecting portions. Each connecting portion comprises a half tooth that extends radial outwards from the yoke. The half tooth comprises a width that substantially equals half of the width of each tooth, so that the protrusion formed by two adjacent half teeth located on connecting portions affixed to each other has substantially the same dimensions as the other teeth of the stator.

However, the tooth formed by two half teeth still exhibits reduced mechanical strength and may thus vibrate during operation of the electrical machine. In particular, electromechanical forces that act on the tooth built by the two half teeth may cause it to bend. Although it is unlikely that this tooth breaks, repeated deformation of this tooth probably will affect conductive windings and insulation retained in the gap adjacent to the half tooth.

Consequently, the windings and/or insulation retained in the gap bounded by this split tooth will experience increased abrasion over time, which in turn limits the lifetime of the stator and the electrical machine. Furthermore, the probability of a short circuit is increased. Generators of wind turbines have to be halted in cases of short circuits so that delays and instable supply of electricity may result.

Several attempts to address the problem of decreased mechanical stability of the half teeth located on the joint of the stator segments have been undertaken.

For example, it has been proposed to arrange a filling material between the connecting portions of adjacent stator segments that comprises glass fibre sheets provided with hardening polyepoxid resin. Hence, the mechanical stability of the half teeth located at the joint of the stator segments is increased by means of adhesively connecting the connecting portions to each other. This approach suffers from limited applicability in serial production as the glass fibre sheets have to be adjusted manually which is a difficult and time consuming process.

Another known approach includes limiting the ratio between the length and the width of the teeth and the half teeth defining the gaps accommodating the windings. Consequently, the coils of windings arranged in the gaps have to be of limited size, which in turn limits the efficiency of the electrical machine.

Another well-established approach is to introduce wedges acting as fixture means into a radial outer section of each gap. Each wedge is form-fitted between two adjacent teeth or one tooth and one half tooth. In order to achieve a suitable form fit, the wedge has a shape corresponding to undercuts arranged in radial outer section of the adjacent teeth or the adjacent tooth and the adjacent half tooth. In particular, the undercut may have a cross-section that is shaped like a dovetail. Hence, each wedge is arranged between two teeth or one tooth and one half tooth. Due to manufacturing tolerances, form-fitting of wedges into the gaps is a difficult and time consuming process as manufacture tolerances have to be properly accounted for. In summary, the process is challenging to apply in a serial production.

It is also common to manufacture stators and stator segments from a plurality of laminations made from a metal.

It is an object of the present invention to provide the teeth of the stator located at the joint of interconnected stator segments with increased stability.

The object is achieved by a stator of the aforementioned type wherein at least the means of fixture retaining the windings in the gap adjacent to the teeth formed by the two adjacent half teeth is a resin sealing a radial outer section of the gap adjacent to the at least one connecting portion.

Hence, the radial element is supported from the inside of the gap adjacent thereto. Mechanical support is achieved by introducing the hardening resin into the gap which is a process that may readily be applied in serial production. Hence, the cumbersome task of form fitting a wedge into the gap adjacent to the radial element is omitted and manufacture tolerances are accounted for.

Preferably, the resin contains a material of positive magnetic susceptibility, in particular iron. Increase of magnetic permeability improves the overall efficiency of the electrical machine. When the electrical machine is configured as a generator, in particular a generator for a wind turbine, the output of generated electricity is increased.

In a preferred embodiment of the invention, the resin contains a polymer, in particular polyepoxid. Polymeric resins having suitable properties for providing the half tooth of the connecting portion with sufficient mechanical stability when hardened are inexpensive and readily available. Consequently, production costs are minimised.

The radial outer section of the gap adjacent to the tooth formed by the two adjacent half teeth comprises preferably an undercut. Hence, a form-fit is provided between the hardened resin, the tooth and the half tooth. The half tooth is connected to the adjacent tooth by a layer of resin introduced into the gap located at a joint of interconnected stator segments.

Preferably, the undercut has a shape of a dovetail further increasing the mechanical stability. More particularly, the dovetail fit reduces the probability that the layer of hardened resin falls out of the gap located the joint of interconnected stator segments.

The invention further relates to a generator for a wind turbine comprising a rotor rotatably arranged relative to a stator as described herein before. The stator is provided with improved mechanical stability, so that damages to the windings intermediately arranged between the teeth and/or half teeth, in particular damages due to vibrations, are minimised. The probability of a short circuit is reduced. Hence, the generator features an increased life span and may operate reliably for prolonged periods of time. The generator is particularly suited for wind turbines installed at remote locations such as offshore wind parks.

The wind turbine comprising the stator is preferably of the directly driven type and does not comprise a gear box or transmission arranged between the rotating components of the wind turbine, in particular a rotor hub mounting a plurality of rotor blades, and the rotor for conversion of a torque.

The invention further relates to a method of manufacturing a stator as described herein before. The method comprises the steps of
- providing a plurality of stator segments, each stator segment including a yoke and a plurality of teeth projecting radial outwards from the yoke so as to define a plurality of gaps intermediately arranged between the teeth and at least one connecting portion adapted to be connected to the connecting portion of an adjacent stator segment, the at least one connecting portion comprising a half tooth having a width corresponding to half of the width of each tooth;
- connecting the connecting portions of the stator segments so as to form a generally annular structure having at least one tooth formed by two half teeth of connecting portions connected to each other;
- arranging conductive windings in the gaps;
- introducing a resin in each gap adjacent to one of the half teeth from a radial outward direction.

During the manufacturing process of the stator, the resin is pressed into the gap adjacent to the half teeth of the at least one connecting portion from the radial outward direction. Hence, the work intensive process of form-fitting wedges or the like is omitted. The method of manufacturing of the stator may be readily applied in a serial production. Hence, production costs are minimzed.

In further development of the invention, it is suggested to press the hardening resin into each gap for manually supporting all of the teeth and/or half teeth circumferentially arranged around the stator.

In the following the invention is described in more detail with reference to the figures, wherein:
- fig. 1: shows a section of a stator according to prior art;
- fig. 2: a section of a stator according to a first embodiment of the invention;
- fig.3: a section of a stator according to a second embodiment of the invention.

Like parts are indicated in all figures with like reference symbols.

It is understood that the sections of stators depicted in all figures are shown as linear arrangements for illustrative purposes only. Generally, the stators have annular structures.

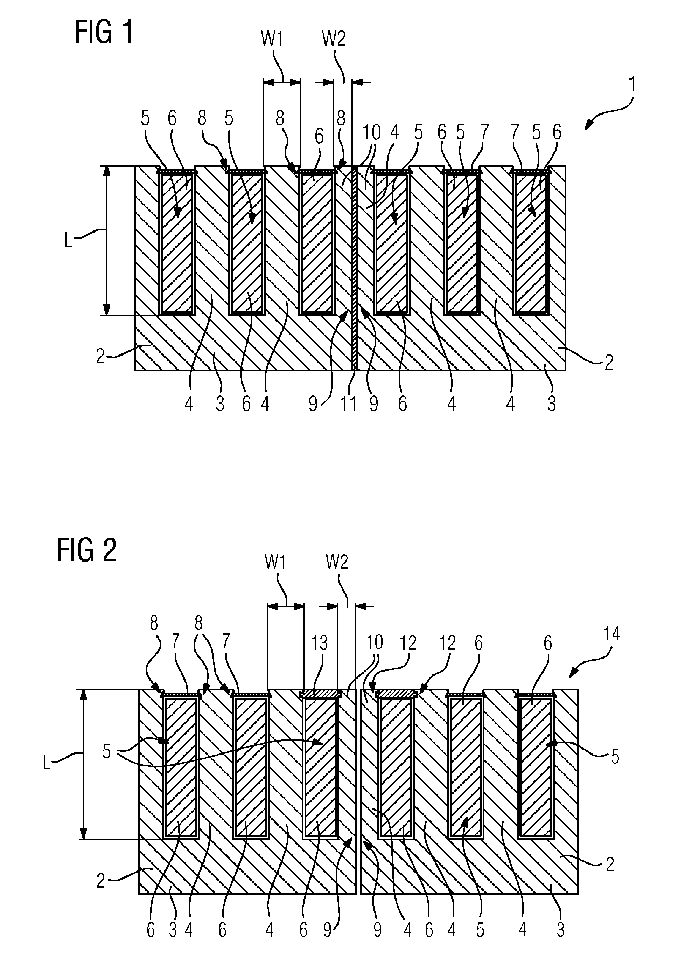

Fig. 1 illustrates a stator 1 according to prior art. The section shown in the sectional view of fig. 1 is located at the joint of two interconnected stator segments 2 of the stator 1. Each stator segment 2 is made from a plurality of laminations made from a metal.

Each stator segment 2 comprises a yoke 3 (stator lamination yoke) extending over an annular section of the stator 1. A plurality of teeth 4 (stator lamination teeth) extend from the yoke 3 in the radial outward direction. The teeth 4 are distributed around the circumference of the stator 1 at regular intervals so that consecutive teeth 4 define a plurality of gaps 5 that are circumferentially distributed around the stator 1. All of the teeth 4 exhibit corresponding dimensions, in particular a first width W1 extending in the circumferential direction.

Coils of conductive windings 6 are arranged in the gaps 5. The windings 6 are made from copper and retained in the gaps 5 by a means of fixture.

Each winding 6 is retained in the respective gap 5 by a wedge 7 that is form-fitted into a radial outer section of the corresponding gap 5. The positive engagement of the wedge 7 and the teeth 4 adjacent thereto is achieved by triangular first undercuts 8. The shape of the first undercuts 8 correspond to the trapezoid shape of the wedges 7.

The stator segments 2 are connected to each other via connecting portions 9. Each connecting portion 9 comprises a half tooth 10 (stator lamination half tooth) projecting radial outwards from the yoke 3 of each stator segment 2. As illustrated in fig. 1, the two half teeth 10 arranged adjacent to each other form the tooth 4 located at the joint of interconnected stator segments 2. The tooth 4 located adjacent to the connecting portions 9 comprises the same width W1 as the other teeth 4 of the stator 1, as it is formed by two smaller half teeth 10 abutting on each other. Each half tooth 10 has a second width W2 that corresponds to half of the first width W1 of the teeth 4.

The teeth 4 and the half teeth 10 extend radial outwards from the yoke 3 by a length L.

The windings 6 arranged in the gap 5 bounded by one of the half teeth 10 and one of the teeth 4 are retained therein by another of the wedges 7. Accordingly, each half tooth 10 also comprises the triangular undercut 8 for positive engagement with one of the wedges 7.

Arrangement of wedges 7 into gaps 5 is a time consuming task that is difficult to incorporate in a serial process, as material tolerances have to be properly accounted for.

In order to increase the mechanical stability of the tooth 4 formed by the two half teeth 10 located at the connecting portions 9 of adjacent stator segments 2, a filling material 11 comprising glass fibre sheets with a resin containing polyepoxid is introduced between the adjacent connecting portions 9.

Mechanical stability of the teeth 4 formed by the two adjacent half teeth 10 may also be provided by limiting the length L defining the depth of the gaps 5 accommodating the windings 6. However, this severely limits the efficiency of the electrical machine comprising the stator 1. Furthermore, the choice of materials for the windings 6 is restricted to materials having superior electrical conductivity.

It is desired to use inexpensive materials, in particular aluminium, for the windings 6. However, aluminium has inferior conducting properties in comparison to copper. Hence, the use of aluminium requires gaps 5 of increased depths suitable for accommodating larger coils of windings 6 that may compensate for the reduced electrical conductivity. As a consequence, the introduction of aluminium as a material for the windings 6 requires further constructional changes to ensure mechanical stability of the stator 1.

The ratio between the length L and the width W1, W2 is restricted to be equal or less than 5 for the conventional stator 1 illustrated by fig. 1 to ensure sufficient mechanical stability. Hence, the length L is severely limited to provide the stator 1 with sufficient mechanical stability.

It is also known to retain the windings 6 in the gaps 5 by wedges 7 of different shapes that are form fitted into radial outer sections of the gaps 5. In particular, it is known to provide a form-fit between a wedge 7 and an undercut 8 as a dovetail joint.

Fitting of the wedges 7 into the gaps 5 is a work intensive process. Consequently, the process of manufacturing the stator 1 according to prior art as illustrated in fig. 1 includes steps that are difficult to incorporate in a serial production.

Fig. 2 illustrates a stator 14 according to an exemplary embodiment of the invention. As already described herein before, the stator 14 is assembled from a plurality of stator segments 2 that are interconnected via connecting portions 9.

Each stator segment 2 extends over an annular section of the stator 14. Each stator segment 2 comprises the yoke 3 (stator lamination yoke) with the teeth 4 (stator lamination teeth) extending radial outwards therefrom. Each tooth 4 has a first width W1 and a length L. The tooth 4 that is located at the joint of interconnected connecting portions 9 is formed by two half teeth 10 (stator lamination half teeth) adjacent to each other. Each half tooth has a second width W2 that equals to half of the first width W1.

The teeth 4 of the stator 14 comprise first and second undercuts 8, 12 of different shape to firmly retain a means of fixture disposed in the gaps. Each half tooth 10 and the tooth 4 adjacent to one of the half teeth 10 exhibits the second undercuts 12. The second undercuts 12 are shaped as dovetails. All other gaps 5 of the stator segments 2 comprise first undercuts 8 of triangular shape disposed in the respective teeth 4.

The radial outer section of the gaps 5 adjacent to the half teeth 10 is sealed by a resin containing polyepoxid. After hardening, a layer 13 of resin is formed that supports the half tooth 10 from inside the gap 5. Hence, the resilience of the half tooth 10, in particular versus bending in the circumferential direction is increased. The resin contains iron to improve the magnetic susceptibility.

After hardening, each layer 14 adhesively connects to the adjacent teeth 4 and half tooth 10. The second undercuts 12 provide and additional form-fit to firmly retain the layer 13 within the gap 5.

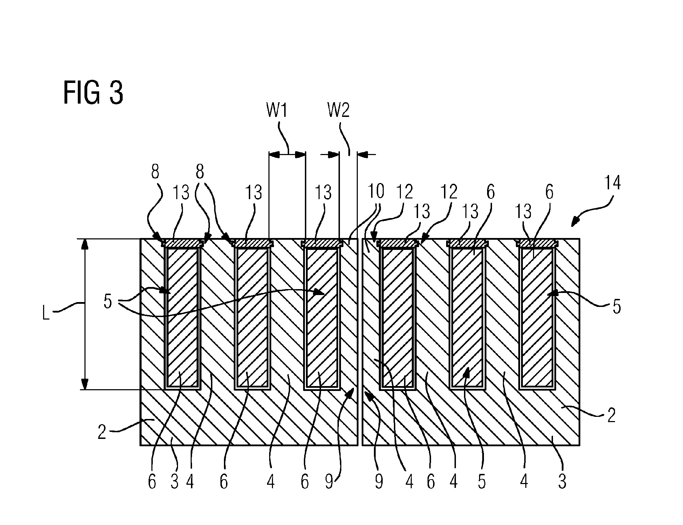

Fig. 3 shows a second embodiment of the invention that essentially corresponds to the first embodiment already described herein before with respect to fig. 2. According to the second embodiment, all gaps 5 of each stator segment 2 are sealed by a hardened layer 13 of resin. Hence, the gaps 5 exhibiting first undercuts 8 are also sealed by introducing the resin containing polyepoxid.

Manufacturing of the stator 14 according to the first and/or second embodiment is easily incorporated in a serial process. In a first step, the plurality of stator segments 2 forming the annular structure of the stator 14 is provided. Each stator segment 2 is assembled from a plurality of laminations made from a suitable metal. The stator segments 2 are connected to each other via the connecting portions 9 so as to form the generally annular structure of the stator 14. The conductive windings 6 are arranged within the gaps 5 and the resin containing the polyepoxid is introduced into the gaps 6 adjacent to the half teeth 10 from a radial outward direction. The resin is pressed into the respective gaps 5 until the resin hardens.

The remaining gaps 5 may be closed by introducing resin or, alternatively, by introduction of suitably shaped wedges 7.

Although the present invention has been described in detail with reference to the preferred embodiment, the present invention is not limited by the disclosed examples from which the skilled person is able to derive other variations without departing from the scope of the invention.

## Claims

1. Stator (14) for an electrical machine, in particular for a generator of a wind turbine, comprising a plurality of interconnected stator segments (2) forming a generally annular structure, each stator segment (2) including
- a yoke (3) extending over a section of the annular structure;
- a plurality of teeth (4) projecting radial outwards from the yoke (3) so as to define a plurality of gaps (5) intermediately arranged between the teeth (4), each gap (5) containing conductive windings (6) that are retained therein by a means of fixture;
- at least one connecting portion (9) adapted to be connected to the connecting portion (9) of an adjacent stator segment (2), the at least one connecting portion (9) comprising a half tooth (10) having a width (W2) corresponding to half of the width (W1) of each tooth (4), wherein at least two adjacent half teeth (10) form at least one tooth (4) located at the joint of interconnected stator segments (2), **characterized in that** at least the means of fixture retaining the windings (6) in the gap (5) adjacent to the tooth (4) formed by the two adjacent half teeth (10) is a resin sealing a radial outer section of the gap (5) adjacent to the at least one connecting portion (9).

2. Stator (14) according to claim 1, **characterized in that** resin contains a material of positive magnetic susceptibility, in particular iron.

3. Stator (14) according to claim 1 or 2, **characterized in that** the resin contains a polymer, in particular polyepoxid.

4. Stator (14) according to any of the previous claims, **characterized in that** the radial outer section of the gap (5) adjacent to the tooth (4) formed by the two adjacent half teeth (10) comprises an undercut (8, 12).

5. Stator (14) according to claim 4, **characterized in that** the undercut (12) has the shape of a dovetail.

6. Generator for a wind turbine comprising a rotor rotatably arranged relative to a stator (14) according to one of the previous claims.

7. Method of manufacturing a stator (14) according to one of the previous claims 1 to 5, comprising the steps of
- providing a plurality of stator segments (2), each stator segment (2) including a yoke (3) and a plurality of teeth (4) projecting radial outwards from the yoke (3) so as to define a plurality of gaps (5) intermediately arranged between the teeth (4) and at least one connecting portion (9) adapted to be connected to the connecting portion (9) of an adjacent stator segment (2), the at least one connecting portion (9) comprising a half tooth (10) having a width (W2) corresponding to half of the width (W1) of each tooth (4);
- connecting the connecting portions (9) of the stator segments (2) so as to form a generally annular structure having at least one tooth (4) formed by two half teeth (10) of connecting portions (9) connected to each other;
- arranging conductive windings (6) in the gaps (5);
- introducing a resin in each gap (5) adjacent to one of the half teeth (10) from a radial outward direction.
